# EUROPÄISCHE PATENTANMELDUNG

(11) **EP 1 471 123 A1**
(43) Veröffentlichungstag der Anmeldung: **27.10.2004**
(21) Anmeldenummer: 03009114.4
(22) Anmeldetag: 21.04.2003
(51) Int. Cl.: C09D 167/08, C08G 63/60, C08G 63/48

(54) **Alkydharz-Emulsion für Decklacke**

(71) Anmelder: Surface Specialties Austria GmbH, 8402 Werndorf (AT)
(72) Erfinder: Urbano, Edmund Dr., 8044 Graz (AT); Gobec, Michael, 8010 Graz (AT); Ferk, Oliver, 8054 Graz (AT)
(74) Vertreter: Deckers, Hellmuth, Dr.

(57) **Zusammenfassung**

Alkydharzemulsionen für Decklacke enthaltend ein nicht wasserlösliches Alkydharz **A** und ein als Emulgierharz verwendetes wasserlösliches Alkydharzes **B**, das ein Veresterungsprodukt ist aus einem Alkydharz **Ba**, das mit dem zu emulgierenden Alkydharz **A** mindestens in einem Massenverhältnis-Bereich von **Ba** zu **A** von 2 : 98 bis 50 : 50 homogen mischbar ist, und einem Addukt **Bb** aus einem C₁-C₄- Alkoxypolyäthylenglykol **Bba** und einem cycloaliphatischen Dicarbonsäureanhydrid Bbb in einem Stoffmengenverhältnis von **Bba** zu **Bbb** von 0,95 : 1,05 mol/mol bis 1,05 : 0,95 mol/mol, Verfahren zu ihrer Herstellung, und ihre Anwendung zur Beschichtung von Substraten ausgewählt aus Textilien, mineralischen Materialien, Metallen und Holz

## Beschreibung

Die Erfindung betrifft Alkydharzemulsionen für Decklacke insbesondere mit einem erhöhten Feststoffgehalt sowie ein Verfahren zu deren Herstellung in einer gegebenenfalls auch lösungsmittel- und/oder neutralisationsmittelfreien Form.

In den letzten Jahren sind wasserverdünnbare Bindemittel für Lacke und andere Beschichtungsmittel in verschiedener Form im wesentlichen aus ökologischen Gründen entwickelt worden. Die für höherwertige Anstrichmittel wie Decklacke auf Holz und Metall verwendeten wäßrigen Dispersionen von Alkydharzen, im Folgenden durchweg als "Alkydharzemulsionen" bezeichnet, besitzen aus Gründen der Herstellung, der Stabilisierung oder ihrer weiteren Verarbeitung einen Festkörper-Massenanteil von maximal 45 % und Anteile an organischen Lösemitteln und/oder an flüchtigen Neutralisationsmitteln, wie Aminen und Ammoniak.

Diese Anteile können zwar, wie in der US 3,269,967 oder US 3,440,193 beschrieben, bei Verwendung von Emulgatoren wie Alkylphenoläthoxylaten und Fettalkoholäthoxylaten vermindert werden, doch werden durch diese niedermolekularen Stoffe, die im gehärteten Film unverändert vorliegen, die Eigenschaften der gebildeten Filme wie Trocknung, Härte, Glanz, Wasser- und Wetterfestigkeit negativ beeinflußt. Daher können diese Bindmittel nicht für Decklacke verwendet werden.

In den österreichischen Patentschriften AT-B 325 742, 333 035 und 336 277 wird der Einsatz von mit Polyäthylenglykol modifizierten Emulgatorharzen zur Emulgierung von Alkydharzen beschrieben, wodurch die genannten Nachteile weitgehend vermieden werden sollen. Zur Erzielung von stabilen Emulsionen benötigen diese Bindemittel aber neben einem höheren Anteil an Emulgatorharz auch Neutralisationsmittel zur Stabilisierung sowie auch organische Hilfslösungsmittel. Dadurch zeigen die mit solchen Bindemittelemulsionen erhaltenen Filme ebenfalls Mängel in der Trocknung, Wasser- und Wetterfestigkeit.

Diese Nachteile konnten auch durch die Verwendung von ungesättigten Polyurethanen als Emulgatoren, wie sie in dem Dokument DE-A 43 06 946 beschrieben sind, nicht behoben werden.

Die Verwendung von Alkoxypolyäthylenglykol (Polyäthylenglykolmonoalkyläther) zur Emulgierung führt nach der Lehre der US-A 3,457,206 ebenfalls nur in Verbindung mit der Neutralisation freier Carboxylgruppen mit Alkanolaminen oder Alkalihydroxiden zu wäßrigen Alkydharzen, die sich für feststoffreiche Anstrichmittel aber nicht eignen.

Nach der Lehre der WO-A 94/18260 können durch Verwendung von Alkoxypolyäthylenglykol auch ohne Neutralisation saurer Gruppen wasserlösliche Harze erhalten werden, die als Dispergiermittel oder Holzschutzmittel Verwendung finden. Diese Harze enthalten Methoxypolyäthylenglykol in leicht verseifbarer Form gebunden und können erst kurz vor der Anwendung mit Wasser verdünnt werden. Sie eignen sich als Alleinbindemittel nicht für wetterfeste, glänzende Beschichtungen, wie man sie von Alkydharzdecklacken erwartet.

In der EP-A 1 092 742 wurde beschrieben, daß man feststoffreiche, wäßrige Emulsionen von Alkydharzen ohne zusätzliche Neutralisation und Lösemittel erhält, wenn die Herstellung der Emulsionen durch Verwendung von besonders aufgebauten Emulgatorharzen auf der Basis einer Polyhydroxylkomponente aus der Klasse der Zuckeralkohole, die zu einem Ringschluß durch Dehydratisierung befähigt sind, einem Alkoxypolyäthylenglykol und von Mono- und Dicarbonsäuren bzw. deren Anhydriden erfolgt. Durch den speziellen Aufbau des Emulgatorharzes und ausschließliche Verwendung von cycloaliphatischen Dicarbonsäuren wird eine ausreichend hohe Verseifungsbeständigkeit der wäßrigen Lösung und eine Verträglichkeit mit den zu emulgierenden Alkydharzen erreicht, die es erlauben, lösungsmittelfreie Alkydharze in Form ihrer Schmelze zu emulgieren. Die nach diesem Verfahren hergestellten Alkydharzemulsionen können aber nur bedingt für hochglänzende und gilbungsarme pigmentierte Decklacke verwendet werden, weil das verwendete Emulgierharz Glanzhaltung und Gilbung des Lackes unter Bewitterungsbedingungen ungünstig beeinflußt.

Überraschenderweise wurde nun gefunden, daß man feststoffreiche, wäßrige Emulsionen von Alkydharzen ohne zusätzliche Neutralisation und ohne Zusatz von Lösungsmitteln erhält, wenn die Herstellung der Emulsionen durch Verwendung von neuen, besonders aufgebauten Emulgierharzen und bei bestimmten Verfahrensbedingungen erfolgt.

Die vorliegende Erfindung betrifft demgemäß Alkydharzemulsionen für Decklacke enthaltend ein nicht wasserlösliches Alkydharz **A** und ein als Emulgierharz verwendetes wasserlösliches Alkydharz **B**, das ein Veresterungsprodukt ist aus einem Alkydharz **Ba**, das mit dem zu emulgierenden Alkydharz **A** mindestens in einem Massenverhältnis-Bereich von **Ba** zu **A** von 2 : 98 bis 50 : 50 homogen mischbar ist, und einem Addukt **Bb** aus einem C₁-C₄- Alkoxypolyäthylenglykol **Bba** und einem cycloaliphatischen Dicarbonsäureanhydrid **Bbb** in einem Stoffmengenverhältnis von **Bba** zu **Bbb** von 0,95 : 1,05 mol/mol bis 1,05 : 0,95 mol/mol.

Die vorliegende Erfindung betrifft auch ein Verfahren, bei dem
- im ersten Schritt Massenanteile von
   70 % bis 95 % eines C₁-C₄ -Alkoxypolyäthylenglykols **Bba** mit einer gewichtsmittleren molaren Masse M_{w} von 500 g/mol bis 4000g/mol, und
   5 % bis 30 % eines cycloaliphatischen Dicarbonsäureanhydrids **Bbb** in einem Stoffmengenverhältnis von 0,95 : 1,05 mol/mol bis 1,05 : 0,95 mol/mol gemischt werden, und in Gegenwart eines Katalysators unter Öffnung des Säureanhydrids zu einem
   Addukt **Bb** umgesetzt werden,
- im zweiten Schritt ein Massenanteil von 40 bis 75 % des Addukts **Bb** mit einem Massenanteil von 25 bis 60 % des Alkydharzes **Ba** verestert wird, wobei die Summe der genannten Massenanteile in der Reaktionsmischung 100 % ergibt, unter Bildung eines Alkydharzes **B**,
- im dritten Schritt das Alkydharz **B** mit Wasser gemischt wird, wobei in der Mischung ein Massenanteil des Alkydharzes von 30 bis 60 % vorliegt, und die Mischung eine dynamische Viskosität, gemessen bei 23 °C und einem Schergefälle von 100 s⁻¹, von 5 Pa·s bis 50 Pa·s aufweist, und
- im vierten Schritt das Alkydharz A mit der Mischung von Wasser und dem Alkydharz **B** aus dem dritten Schritt bei einer Temperatur unter 100 °C gemischt und die resultierende Alkydharzemulsion durch Zugabe von Wasser auf einen Festkörper-Massenanteil von 40 % bis 75 % und einer dynamischen Viskosität von 200 mPa·s bis 3000 mPa·s verdünnt wird.

Schließlich betrifft die vorliegende Erfindung auch die Verwendung der erfindungsgemäßen Alkydharzemulsionen zur Herstellung von wasserverdünnbaren Lacken oder Lasuren, insbesondere als Bindemittel zur Beschichtung von Substraten ausgewählt aus Textilien, mineralischen Materialien, Metallen und Holz.

Unter "homogen mischbar" oder "verträglich" wird hier ein System aus mindestens zwei Komponenten verstanden, das im gesamten betrachteten Zusammensetzungsbereich einphasig ist. Unter "wasserlöslich" wird hier ein Stoff verstanden, der mit Wasser eine einphasige flüssige Mischung bildet, in der mindestens ein Massenanteil von 5 % des gelösten Stoffes enthalten sind. Stoffe, auf die diese Bedingung nicht zutrifft, werden als "wasserunlöslich" bezeichnet.

Geeignete Alkydharze **A** sind mit natürlichen Fetten, Ölen und/oder synthetischen Fettsäuren modifizierte Polyesterharze, hergestellt durch Veresterung mehrwertiger Alkohole, von denen einer mindestens dreiwertig sein muß, mit mehrbasischen Carbonsäuren sowie den genannten Fetten, Ölen und/oder Fettsäuren.

Zu den bevorzugten Alkydharzen **A** zählen kurz-, mittel- oder langölige Alkydharze mit einem Ölgehalt (Massenanteil von Ölen in der Mischung der Ausgangsprodukte) von 25 % bis 75 %, die gegebenenfalls in bekannter Weise, z.B. durch Monocarbonsäuren wie Benzoesäure, tert.-Butylbenzoesäure, Harzsäuren, wie sie zum Beispiel im Kolophonium vorliegen, oder verzweigte Carbonsäuren wie z.B. 2-Äthylhexansäure, Isononansäure und Versaticsäure, oder Hartharze, wie Kolophoniumharze oder Phenolharze oder durch den Einbau von Urethangruppen modifiziert sein können. Selbstverständlich können auch Gemische dieser Harze zum Einsatz kommen, sofern sie in dem vorgesehenen Bereich der Zusammensetzung homogen mischbar sind.

Für oxidativ trocknende Alkydharze werden ungesättigte Fettsäuren oder Öle mit einer Jodzahl von mindestens 100 cg/g, vorzugsweise von 120 cg/g bis 200 cg/g bevorzugt, wobei isolierte und konjugierte Doppelbindungen vorliegen können. Sie werden beispielsweise aus pflanzlichen Quellen wie Sojaöl, Fischöl, Sonnenblumenöl, Leinöl, Safloröl und Baumwollsaatöl gewonnen oder entstammen der Tallöldestillation. Fettsäuren mit konjugierten Doppelbindungen werden durch katalytische Isomerisierung von natürlichen Fettsäuren oder aus dehydratisiertem Rizinusöl gewonnen. Konjugiertes Öl wird bevorzugt durch Dehydratisierung von Rizinusöl erhalten.

Die Jodzahl ist gemäß DIN 53 241-1 definiert als der Quotient derjenigen Masse ***m***_{I} an Jod, die unter Entfärbung an die olefinischen Doppelbindungen einer zu untersuchenden Probe addiert wird, und der Masse ***m***_{B} dieser Probe (Masse des Feststoffes in der Probe bei Lösungen oder Dispersionen); ihre übliche Einheit ist "g/(100 g)" oder "cg/g".

Daneben können teilweise oder vollständig auch gesättigte Öle oder gesättigte Fettsäuren mit 10 bis 22 Kohlenstoffatomen verwendet werden, sofern eine oxidative Trocknung des erhaltenen Harzes nicht beeinträchtigt wird.

Der Aufbau und die Herstellung dieser Harze sind dem Fachmann bekannt und in der einschlägigen Fachliteratur beschrieben. Die Harze werden vorteilhafterweise unverdünnt (in ihrer 100 %igen Form) eingesetzt.

Die Alkydharze **Ba** sind bevorzugt mit den Alkydharzen A identisch oder enthalten ebenfalls bevorzugt die gleichen Stoffe als Ausgangsprodukte, wobei sich die Zusammensetzung nur quantitativ, nicht jedoch qualitativ unterscheidet (also nur die Menge, nicht jedoch die Art der Zusammensetzung). Erfindungsgemäß ist es erforderlich, daß sie mit den Alkydharzen **A** homogen mischbar sind zumindest in dem Bereich der Zusammensetzungen von Massenanteilen von 2 % bis 50 % des Harzes **Ba** in der Mischung mit dem Alkydharz **A**. Bevorzugt weist das Alkydharz **Ba** eine Hydroxylzahl von mindestens 30 mg/g auf.

Die Hydroxylzahl ist gemäß DIN EN ISO 4629 definiert als der Quotient derjenigen Masse ***m***_{KOH} an Kaliumhydroxid, die genausoviel Hydroxylgruppen aufweist wie eine zu untersuchende Probe, und der Masse ***m***_{B} dieser Probe (Masse des Feststoffes in der Probe bei Lösungen oder Dispersionen); ihre übliche Einheit ist "mg/g".

Das C₁-C₄- Alkoxypolyäthylenglykol **Bba** ist ein einseitig veräthertes Polyäthylenglykol mit einer gewichtsmittleren molaren Masse von ca. 500 g/mol bis ca. 4000 g/mol, bevorzugt von 750 g/mol bis 3800 g/mol, und insbesondere von 900 g/mol bis 2500 g/mol. Der Verätherungsalkohol ist ausgewählt aus den linearen und verzweigten aliphatischen Alkoholen mit einem bis vier Kohlenstoffatomen, also Methanol, Äthanol, n- und iso-Propanol und n-, sek.-, iso- und tert.-Butanol. Bevorzugt sind die mit Methanol einfach verätherten Polyäthylenglykole.

Die cycloaliphatischen Dicarbonsäureanhydride **Bbb** sind insbesondere Hexahydrophthalsäureanhydrid, Tetrahydrophthalsäureanhydrid und ihre Alkylderivate wie z.B. Methyltetrahydrophthalsäureanhydrid. Überraschenderweise haben sich Bernsteinsäure- und Maleinsäureanhydrid nicht bewährt, sie ergeben wie Phthalsäureanhydrid eine höhere Verseifungsrate und eine schlechtere Stabilität der Alkydharzemulsionen.

Die Komponenten **Bba** und **Bbb** werden in einem Stoffmengenverhältnis von **Bba** zu **Bbb** von 0,95 : 1,05 mol/mol bis 1,05 : 0,95 mol/mol eingesetzt, bevorzugt ist dies Verhältnis 0,97 : 1,03 bis 1,03 : 0,97, und insbesondere 0,99 : 1,01 bis 1,01 : 0,99.

Bei dem erfindungsgemäßen Verfahren werden im ersten Schritt Massenanteile von 70 % bis 95 %, bevorzugt 75 % bis 94 %, und insbesondere 80 % bis 93 % des Alkoxypolyäthylenglykols **Bba** mit 5 % bis 30 %, bevorzugt 6 % bis 25 %, und insbesondere 7 % bis 20 % des Dicarbonsäureanhydrids **Bbb** in einem Stoffmengenverhältnis von 0,95 : 1,05 mol/mol bis 1,05 : 0,95 mol/mol gemischt, und in Gegenwart eines Katalysators unter Öffnung des Säureanhydrids zu einem Addukt **Bb** umgesetzt. Je nach den molaren Massen der Komponenten **Bba** und **Bbb** stellt sich ein Stoffmengenverhältnis ein, das bevorzugt 0,97 : 1,03 bis 1,03 : 0,97, und insbesondere 0,99 : 1,01 bis 1,01 : 0,99 beträgt. Dabei wird zunächst eine Mischung der genannten Komponenten hergestellt und diese dann bevorzugt unter Zusatz eines Katalysators, insbesondere eines tertiären Amins, auf eine Temperatur von 100 °C bis 180 °C, bevorzugt 120 °C bis 170 °C und insbesondere 130 °C bis 160 °C erhitzt. Die Umsetzung wird solange vorgenommen, bis in regelmäßigen Abständen entnommene Proben keine Änderung der Säurezahl der Reaktionsmischung mehr zeigen.

Die Säurezahl ist gemäß DIN EN ISO 3682 definiert als der Quotient derjenigen Masse ***m***_{KOH} an Kaliumhydroxid, die erforderlich ist, um eine zu untersuchende Probe zu neutralisieren, und der Masse ***m***_{B} dieser Probe (Masse des Feststoffes in der Probe bei Lösungen oder Dispersionen); ihre übliche Einheit ist "mg/g".

Im zweiten Schritt wird ein Massenanteil von 40 % bis 75 %, bevorzugt 42 % bis 70 %, insbesondere 45 % bis 65 % des Addukts **Bb** mit einem Massenanteil von 25 % bis 60 %, bevorzugt 30 % bis 58 %, insbesondere 35 % bis 55 %, des Alkydharzes **Ba** verestert, wobei die Summe der genannten Massenanteile in der Reaktionsmischung 100 % ergibt, unter Bildung eines Alkydharzes **B**. Diese Umsetzung wird bevorzugt anschließend an die Bildung des Addukts **Bb** in demselben Reaktionsgefäß vorgenommen. Die Veresterung erfolgt bevorzugt bei einer Temperatur von ca. 180 °C bis ca. 260 °C, bevorzugt ca. 200 bis ca. 240 °C, und bevorzugt in Gegenwart von Schleppmittel wie Xylol unter azeotroper Destillation und Rückführung des Schleppmittels. Die Veresterung wird solange fortgesetzt, bis eine dann entnommene Probe eine Säurezahl von maximal 3 mg/g aufweist.

Nach Abkühlen der Reaktionsmischung wird im dritten Schritt das erhaltene Alkydharz **B** mit Wasser gemischt. wobei in der Mischung ein Massenanteil des Alkydharzes von 30 % bis 60 % vorliegt, und die Mischung eine dynamische Viskosität, gemessen bei 23 °C und einem Schergefälle von 100 s⁻¹, von 5 Pa·s bis 50 Pa·s aufweist.

Im dritten Schritt kann das Alkydharz **B** während der Veresterung gegebenenfalls mit Monocarbonsäuren wie Benzoesäure, tert.-Butylbenzoesäure, Harzsäuren, wie sie im Kolophonium vorliegen, oder verzweigten Carbonsäuren wie z.B. 2-Äthylhexansäure, Isononansäure oder Versaticsäure modifiziert werden.

Im vierten Schritt wird das Alkydharz **A** in die Mischung von Wasser und dem Alkydharz **B** aus dem dritten Schritt bei einer Temperatur unter 100 °C eingerührt, und die resultierende Alkydharzemulsion durch Zugabe von Wasser auf einen Festkörper-Massenanteil von 40 % bis 75 % und einer dynamischen Viskosität von 200 mPa·s bis 3000 mPa·s verdünnt.

Die Komponenten **A** und **B** werden in einem Verhältnis von 70 % bis 95 %, bevorzugt 75 % bis 93 %, und insbesondere 80 % bis 91 % der Komponente **A** und 5 % bis 30 %, bevorzugt 7 bis 25 %, und insbesondere 9 % bis 20 % der Komponente **B**, jeweils bezogen auf die Masse des Feststoffs, bei einer Temperatur bis ca. 100 °C gemischt. Nach gründlicher Homogenisierung kann die so erhaltene Emulsion auf den gewünschten Feststoffgehalt verdünnt werden, wobei sie bei Zugabe einer weiteren Menge von Wasser einen gleichmäßigen Viskositätsabfall zeigt.

Beim erfindungsgemäßen Verfahren können als Komponente **A** auch aufgeschmolzene Festharze mit einer Temperatur bis zu 120 °C zur kalten, wäßrigen Lösung des Emulgatorharzes **B** zugegeben werden, sodaß eine Mischtemperatur von maximal 100 °C erreicht wird. Auch die Zugabe der wäßrigen Emulgierharzlösung zum aufgeschmolzenen Festharz **A** ist möglich, sofern dadurch eine Mischtemperatur von 100 °C nicht überschritten wird.

Während der Mischung der Komponenten A und der wäßrigen Lösung von **B** bildet sich sofort eine Öl-in-Wasser-Emulsion, wodurch bereits nach kurzer Homogenisierung die erhaltene Emulsion auf den gewünschten Feststoffgehalt verdünnt werden kann. Somit treten auch nicht die in herkömmlichen Verfahren - bei welchen ein Emulgator bzw. Emulgatorharz mit dem zu emulgierenden Harz vor der Wasserzugabe gemischt werden - beobachteten Viskositätsmaxima oder Gelzustände auf, welche eine Homogenisierung verhindern oder zumindest erschweren können. Auch neigen die bekannten Emulgatorharze und die einfach aufgebauten Emulgatoren wie Fettalkoholäthoxylate und äthoxylierte Sorbitanester bei der Herstellung der benötigten wäßrigen Emulgierlösung schon bei niedrigem Feststoffanteil zur Gelbildung, wodurch eine Mischung der Emulgatorlösung mit dem wasserunlöslichen Alkydharz A und dessen Emulgierung so wie dem erfindungsgemäßen Verfahren nicht gelingt.

Mit Hilfe der erfindungsgemäßen wasserlöslichen Alkydharze **B** und des beschriebenen Verfahrens können unterschiedliche als Bindemittel für Beschichtungsmaterialien dienende wasserunlösliche Alkydharze **A** in stabile und für die weitere Verarbeitung bzw. Anwendung geeignete wäßrige Emulsionen übergeführt werden.

Erfindungsgemäß ist es weiter bevorzugt, die Säurezahl der Alkydharze **A** und/oder **Ba** vor der weiteren Verarbeitung durch Reaktion mit einem Monoepoxid wie Versaticsäureglycidylester auf maximal 5 mg/g, bevorzugt auf bis zu 3 mg/g zu reduzieren.

Das als Komponente **B** verwendete wasserlösliche Alkydharz dient als Emulgierharz in Form seiner wäßrigen Lösung mit einem Festkörper-Massenanteil von 30 % bis 60 % und einer dynamischen Viskosität von 5 bis 50 Pa·s. Der pH-Wert dieser Lösung dieses Alkydharzes beträgt 3 bis 5, hat aber bei den erfindungsgemäßen Produkten nur geringen Einfluß auf die Stabilität der erzielten Emulsion. Diese Lösungen des Alkydharzes **B** zeichnen sich durch eine konstante Viskosität und nur geringem Anstieg der Säurezahl während einer Lagerung von vier Wochen bei 40 °C aus.

Bei der Veresterung des Addukts **Bb** aus dem Alkoxypolyäthylenglykol **Bba** und dem cycloaliphatischen Dicarbonsäureanhydrid **Bbb** mit einem, dem zu emulgierenden Alkydharz A gleichartigem oder mit ihm bevorzugt in jedem Verhältnis verträglichen Alkydharzes **Ba** mit einer Hydroxylzahl von bevorzugt mindestens 30 mg/g entsteht ein Emulgierharz, mit dessen Hilfe überraschenderweise Alkydharzemulsionen für hochglänzende, pigmentierte Decklacke erzielt werden.

Die erfindungsgemäß hergestellten Emulsionen können je nach Art des emulgierten Alkydharzes als Bindemittel für Lacke, die auch mit (an)organischen Pigmenten und Füllstoffen pigmentiert sein können, sowie für Beschichtungsmittel von Textilien oder mineralischen Materialien u.ä. eingesetzt werden. Auf dem Anstrichsektor lassen sich auf Basis der erfindungsgemäßen Emulsionen Klarlacke, Lasuren, Grundierungen und Decklacke formulieren.

Für die Beschichtung von Werkstücken aus Eisen oder Stahl werden die Emulsionen vorzugsweise mit einem pH-Wert von über 7 eingesetzt, um die bei der Verwendung von sauren wäßrigen Lacksystemen auftretende Flugrostbildung zu vermeiden. Die Einstellung des pH-Wertes mit Alkali- oder Erdalkalihydroxiden kann in jeder Phase des Verfahrens erfolgen, auf die Stabilität der Emulsion hat sie keinen Einfluß.

Die folgenden Beispiele erläutern die Erfindung.

In den nachfolgenden Beispielen bedeuten ebenso wie im vorhergehenden Text alle Angaben mit der Einheit "%" Massenanteile (Quotient der Masse des betreffenden Stoffes und der Masse der Mischung), soweit nicht anders angegeben. Konzentrationsangaben in "%" sind Massenanteile des gelösten Stoffes in der Lösung (Masse des gelösten Stoffes, dividiert durch die Masse der Lösung). Die Messungen der Viskosität wurden gemäß DIN ISO 3219 bei 23 °C und einer Scherrate von 25 s⁻¹ durchgeführt. Die Bestimmung des Festkörper-Massenanteil erfolgte nach DIN 55671 bei einer Temperatur von 120 °C und einer Verweildauer im Umluftofen von 5 Minuten.

### Beispiele

In den Beispielen wurden folgende Produkte eingesetzt:

### Komponente A

Als Komponente **A** wurden handelsübliche Alkydharze in lösungsmittelfreier Form eingesetzt. In Tabelle 1 sind ihre Beschreibung und Kennwerte zusammengefaßt.

**Tabelle 1**

| Zusammensetzungen der Alkydharze (Massenanteile in der Reaktionsmischung, bezogen auf die Masse des Harzes in cg/g) | | | | |
|---|---|---|---|---|
| Alkydharz **A** und **Ba** | | A1 | A2 | A3 |
| Sonnenblumenölfettsäure | | 40 | | |
| Tallölfettsäure | | | 47 | |
| Sojaöl | | | | 62 |
| Benzoesäure | | 18 | | |
| p-tert.-Butylbenzoesäure | | | 12 | |
| Phthalsäureanhydrid | | 25 | 24 | 24,5 |
| Pentaerythrit | | 25 | 24 | 16 |
| Ausbeute | in g | 100 | 100 | 100 |
| Säurezahl | in mg/g | < 5 | < 5 | < 5 |
| OH-Zahl | in mg/g | 70 | 80 | 80 |

### Komponente B

Als Alkydharze **Ba** für Komponente **B** wurden die gleichen Alkydharze wie für A in lösungsmittelfreier Form eingesetzt. In Tabelle 1 sind ihre Beschreibung und Kennwerte zusammengefaßt.

### Beispiel 1 Addukte Bb

In einem üblichen Kunstharzreaktor wurden die in Tabelle 2 angegebenen Massen an Methoxypolyäthylenglykolen (die Typ-Angabe ist die gewichtsmittlere molare Masse des Monoäthers in g/mol) und Tetrahydrophthalsäureanhydrid unter Zusatz eines Massenanteils von 0,1 % Triäthylamin als Katalysator auf 150 °C erhitzt. Diese Temperatur wurde gehalten, bis eine konstante Säurezahl laut Tabelle 2 erreicht wurde.

**Tabelle 2**

| Massenanteil der Reaktanden in cg/g | | | |
|---|---|---|---|
| Addukt **Bb** | | Bb1 | Bb2 |
| Methoxypolyäthylenglykol | 2000 | 92,9 | |
| Methoxypolyäthylenglykol | 1000 | | 86,8 |
| Tetrahydrophthalsäureanhydrid | | 7,1 | 13,2 |
| Säurezahl | in mg/g | 26,5 | 49,0 |

### Beispiel 2 Emulgatorharze B

Im gleichen Kunstharzreaktor wurden die in Tabelle 3 genannten Alkydharze mit den Addukten Bb1 und Bb2 aus Beispiel 1 auf 220 °C erhitzt und 10 % der Masse der Reaktionsmischung an Xylol zugegeben. Nach einer Azeotropdestillation bei 230 °C mit Xylol als Kreislaufmittel und anschließender Destillation unter vermindertem Druck zur Entfernung des Kreislaufmittels wurden lösungsmittelfreie Produkte mit einer Säurezahl von weniger als 3 mg/g und einer dynamischen Viskosität ( mit Wasser auf 50% verdünnt, DIN EN ISO 3219. gemessen bei 23 °C), von 5 bis 25 Pa·s, wie in Tabelle 3 angegeben, erhalten. Nach einer Lagerung bei 40 °C während 2 Wochen blieb die Viskosität der Lösungen praktisch unverändert.

**Tabelle 3**

| Herstellung der Emulgatorharze (eingesetzte Massen in g, Bezeichnung der eingesetzten Reaktanden) | | | | | |
|---|---|---|---|---|---|
| Emulgatorharz | | B 1 | B2 | B3 | B4 |
| Alkydharz | | 40,9 (A1) | 40,9 (A2) | 40,9 (A3) | 40,2 (A3) |
| Addukt | | 64,4 (Bb1) | 64,4 (Bb1) | 64,4 (Bb1) | 55,8 (Bb2) |
| Ausbeute | in g | 100 | 100 | 100 | 100 |
| Säurezahl | in mg/g | 1,5 | 2,3 | 1,8 | 1,0 |
| Dyn. Viskosität, | in mPa·s | 9500 | 15000 | 25000 | 5000 |

### Beispiel 3 (Vergleichsbeispiel: Emulgatorharz auf der Basis von Phthalsäureanhydrid)

56 kg Tallölfettsäure, 41 kg Pentaerythrit, 64 kg Phthalsäureanhydrid, und 0,2 kg Dibutylzinndilaurat als Katalysator wurden auf 180 °C erhitzt und 330 kg Methoxypolyäthylenglykol mit einer gewichtsmittleren molaren Masse von 2000 g/mol zugegeben und weiter auf 230 °C geheizt. Nach einer Azeotropdestillation bei 230 °C mit Xylol als Kreislaufmittel und anschließender Destillation unter vermindertem Druck zur Entfernung des Kreislaufmittels wurden 500 kg eines lösungsmittelfreien Produkts mit einer Säurezahl von 3 mg/g und einer dynamischen Viskosität (mit Wasser auf 50 % verdünnt, 23 °C) von 3600 mPa·s erhalten. Nach einer Lagerung bei 40 °C während 2 Wochen war die Viskosität der Lösung auf 820 mPa·s abgefallen und die Säurezahl auf 6,6 mg/g angestiegen. Die frische Lösung war zwar als Emulgierharzkomponente für die Alkydharze A1, A2 und A3 geeignet, doch wurde eine erheblich geringere Lagerstabilität der daraus hergestellten Alkydharzemulsionen erreicht. So wurde bereits bei einer Lagerung von 1 Woche bei Raumtemperatur ein Ansteigen der Säurezahl und Absetzen der Emulsion beobachtet.

### Beispiel 4

Die erfindungsgemäße Herstellung der Emulsionen erfolgte in den in Tabelle 4 angegebenen Mengenverhältnissen. In einem üblichen Kunstharzreaktor mit Ankerrührwerk wurde die Komponente **B** aus Beispiel 2 vorgelegt und die auf 80 °C vorgewärmte Komponente **A** innerhalb von 2 Stunden unter Rühren zugegeben.

Nach weiterer einstündiger Homogenisierung wurde durch langsame Zugabe von Wasser auf den gewünschten Feststoffgehalt verdünnt und auf 30 °C abgekühlt.

**Tabelle 4**

| Herstellung der Alkydharzemulsionen (eingesetzte Massen in g, Bezeichnung der verwendeten Harze) | | | | | |
|---|---|---|---|---|---|
| Alkydharzemulsion | | 4-1 | 4-2 | 4-3 | 4-4 |
| Alkydharz **A** | | 89 (A1) | 89 (A2) | 88 (A3) | 88 (A3) |
| Emulgatorharz **B** | | 11B1 | 11 B2 | 12 B3 | 12 B4 |
| entionisiertes Wasser | | 66,7 | 66,7 | 66,7 | 66,7 |
| dynamische Viskosität | in mPa·s | 800 | 1100 | 180 | 80 |
| Festkörper-Massenanteil | in % | 60 | 60 | 60 | 60 |
| Anwendung | | Decklack | Decklack | Bautenlack | Bautenlack |

Eine allfällige Einstellung des pH-Wertes auf ca.7 erfolgte durch Zugabe von kleinen Mengen einer 5 %igen Lithiumhydroxidlösung.

Tabelle 4 enthält auch Angaben über die Anwendung der Emulsionen. Diese sind dem Fachmann geläufig und richten sich nach den Empfehlungen der Harzhersteller.

So wurden die oxidativ trocknenden Systeme mit Kobalt-Zirkon-Kombinationstrocknern (6 % Co- und 9 % Zr-Metallgehalt) versetzt und die Trocknung und Filmbeschaffenheit im Vergleich zueinander beurteilt.

Alle Emulsionen ergaben Filme, welche einem lösemittelhaltigen System in Trocknungseigenschaften und Filmbeschaffenheit entsprachen. Die Stabilität der Emulsionen wurde durch Lagerung bei 40 °C und 50 °C sowie 3 Gefrier-Tau-Zyklen bestimmt. Alle erfindungsgemäßen Emulsionen waren nach 240 Stunden (50 °C) bzw. nach 600 Stunden (40 °C) noch in Ordnung. Nach 3 Gefrier-Tau-Zyklen zeigten sich keine signifikanten Veränderungen der Emulsionen.

### Beispiel 5 Herstellung von wasserverdünnbaren Lacken

Aus den Alkydharzemulsionen der Beispiele 4-1 bis 4-4 wurden in nachfolgender Weise Weißlacke unter Verwendung geeigneter Pigmentpasten in folgender Formulierung (Angaben für 100 g Lack) hergestellt:
53,0 g Alkydharzemulsion (Beispiel 4-1 bis 4-4, 60 %ig)
0,50 g Sikkativkombination (6 % Co, 9 % Zirkon, gelöst in Testbenzin)
0,20 g Verlaufs-/ Antikrateradditiv (Acrylpolymer)
0,20 g Entschäumer (Mineralölbasis)
0,80 g Rheologie-Additiv (Polyurethanverdicker)
36,4 g Pigmentpaste (siehe unten)
8,90 g entionisiertes Wasser

Das Bindemittel wurde vorgelegt, anschließend die Pigmentpaste und die Additive langsam und portionsweise eingerührt, und zum Schluß mit Wasser auf die gewünschte Viskosität eingestellt.

Pigmentpaste (Zusammensetzung von 100 g der Pigmentpaste):
17,4 g entionisiertes Wasser
3,6 g Dispergiermittel (nichtionisches Polymer)
1,7 g Propylenglykol
0,8 g Verlauf- und Benetzungsmittel (Acrylpolymer)
1,9 g Entschäumer (Wachsemulsion)
69,3 g Titandioxid (Rutiltyp, 94 % TiO₂, Dichte 4,0 g/cm³)
5,3 g Rheologieadditiv (Polyurethanverdicker)

Die Bestandteile wurden in der angegebenen Reihenfolge eingerührt und anschließend ca. dreißig Minuten in einer Perlmühle dispergiert.

Die Lacke wiesen einen Festkörper-Massenanteil von ca. 57 % auf, und hatten eine Viskosität gemäß ASTM D 4287-88 bei einer Scherrate von 10000 s⁻¹ und 23 °C von ca. 200 mPa·s, die Viskosität gemäß ASTM D 562 bei 23 °C in "Krebseinheiten" betrug ca. 88 KU. Das Verhältnis der Massen von Pigment und Bindemittel betrug ca. 0,8 : 1, der pH-Wert gemäß DIN 53785 bei 23 °C, 10 %ige wäßrige Verdünnung betrug ca. 7,0.
Die Klebfreizeit, gemessen an einer Beschichtung mit 152 µm Aufziehspalt, bei Raumtemperatur (20 °C) war ca. 3 Stunden

Die Lacke wurden auf vorgrundierte Bleche aufgetragen und nach einer Lufttrocknung von ca. 24 Stunden bei Raumtemperatur unter anderem auf Glanz und Glanzschleier beurteilt. Die mit den erfindungsgemäß hergestellten Alkydharzemulsionen formulierten Lacke zeigen einen sehr guten Glanz, bei einem Meßwinkel von 20° wurden Glanzwerte größer als 90 % erreicht. Nach 1 Monat Lagerung der beschichten Bleche bei Raumtemperatur wurde ein durchschnittlicher Glanzabfall von weniger als 5 % gefunden. Bei Dunkellagerung von beschichteten Blechen im Vergleich zu entsprechenden, in Lösungsmitteln gelösten Alkydharzen trat während 3 Monaten Lagerzeit keine stärkere Dunkelgilbung auf, während Lacke auf der Basis von mit Amin neutralisierten sauren Alkydharzen eine signifikant stärkere Dunkelgilbung aufwiesen.

Neben Weißlacken wurden auch Buntlacke und Klarlacke nach einer der angegebenen Rezeptur ähnlichen Formulierung oder in Kombination mit Acrylharzdispersionen hergestellt. Diese zeichneten sich durch guten Verlauf und hohe Fülligkeit des Lackes aus.

## Patentansprüche

1. Alkydharzemulsionen für Decklacke enthaltend ein nicht wasserlösliches Alkydharz **A** und ein als Emulgierharz verwendetes wasserlösliches Alkydharzes **B**, das ein Veresterungsprodukt ist aus einem Alkydharz **Ba**, das mit dem zu emulgierenden Alkydharz **A** mindestens in einem Massenverhältnis-Bereich von **Ba** zu A von 2 : 98 bis 50 : 50 homogen mischbar ist, und einem Addukt **Bb** aus einem C₁-C₄- Alkoxypolyäthylenglykol **Bba** und einem cycloaliphatischen Dicarbonsäureanhydrid Bbb in einem Stoffmengenverhältnis von **Bba** zu **Bbb** von 0,95 : 1,05 mol/mol bis 1,05 : 0,95 mol/mol.

2. Alkydharzemulsionen nach Anspruch 1, **dadurch gekennzeichnet, daß** sie in ihrem Feststoffanteil einen Massenanteil von
70 % bis 95 % des nicht wasserlöslichen Alkydharzes **A** und
5 % bis 30 % des als Emulgierharz verwendeten wasserlöslichen Alkydharzes **B** enthalten.

3. Alkydharzemulsionen nach Anspruch 1, **dadurch gekennzeichnet, daß** das Alkydharz **B** ein Veresterungsprodukt ist aus Massenanteilen von 25 % bis 60 % des Alkydharzes **Ba** und 40 % bis 75 % des Addukts **Bb**.

4. Alkydharzemulsionen nach Anspruch 1, **dadurch gekennzeichnet, daß** das Alkydharz **A** einen Ölgehalt von 25 % bis 75 % und eine Säurezahl von bis zu 20 mg/g aufweist.

5. Alkydharzemulsionen nach Anspruch 1, **dadurch gekennzeichnet, daß** die Säurezahl des Alkydharzes **B** maximal 3 mg/g beträgt.

6. Verfahren zur Herstellung von Alkydharzemulsionen nach Anspruch 1, **dadurch gekennzeichnet, daß**
- im ersten Schritt Massenanteile von
70 % bis 95 % eines C₁-C₄ -Alkoxypolyäthylenglykols **Bba** mit einer gewichtsmittleren molaren Masse M_{w} von 500 g/mol bis 4000g/mol, und
5 % bis 30 % eines cycloaliphatischen Dicarbonsäureanhydrids **Bbb** in einem Stoffmengenverhältnis von 0,95 : 1,05 mol/mol bis 1,05 : 0,95 mol/mol gemischt werden, und in Gegenwart eines Katalysators unter Öffnung des Säureanhydrids zu einem Addukt **Bb** umgesetzt werden,
- im zweiten Schritt ein Massenanteil von 40 bis 75 % des Addukts **Bb** mit einem Massenanteil von 25 bis 60 % des Alkydharzes **Ba** verestert wird, wobei die Summe der genannten Massenanteile in der Reaktionsmischung 100 % ergibt, unter Bildung eines Alkydharzes **B**,
- im dritten Schritt das Alkydharz **B** mit Wasser gemischt wird, wobei in der Mischung ein Massenanteil des Alkydharzes von 30 bis 60 % vorliegt, und die Mischung eine dynamische Viskosität, gemessen bei 23 °C und einem Schergefälle von 100 s⁻¹, von 5 Pa·s bis 50 Pa·s aufweist, und
- im vierten Schritt das Alkydharz A mit der Mischung von Wasser und dem Alkydharz **B** aus dem dritten Schritt bei einer Temperatur unter 100 °C mischt und die resultierende Alkydharzemulsion durch Zugabe von Wasser auf einen Festkörper-Massenanteil von 40 % bis 75 % und einer dynamischen Viskosität von 200 mPa·s bis 3000 mPa·s verdünnt.

7. Verfahren nach Anspruch 6, **dadurch gekennzeichnet, daß** im zweiten Schritt die Menge der Reaktanden so gewählt wird, daß die Säurezahl des Alkydharzes **B** maximal 3 mg/g beträgt.

8. Verfahren nach Anspruch 6, **dadurch gekennzeichnet, daß** das Verhältnis der Masse des Alkydharzes **A** zur Masse des Alkydharzes **B** 70 : 30 kg/kg bis 95 : 5 kg/kg beträgt.

9. Verwendung von Alkydharzemulsionen nach Anspruch 1 zur Herstellung von wasserverdünnbare Lacke oder Lasuren.

10. Verwendung von Alkydharzemulsionen nach Anspruch 1 als Bindemittel zur Beschichtung von Substraten ausgewählt aus Textilien, mineralischen Materialien, Metallen und Holz.
